# EUROPEAN PATENT SPECIFICATION

(11) **EP 2 594 470 B1**
(45) Date of publication and mention of the grant of the patent: **05.03.2014**
(21) Application number: 11189696.5
(22) Date of filing: 18.11.2011
(51) Int. Cl.: B62M 3/08

(54) **Racing pedal for track bicycle**
Rennpedal für ein Radwegfahrrad
Pédale de course pour bicyclette de piste

(43) Date of publication of application: 22.05.2013
(73) Proprietor: VP Components Co., Ltd., Taichung City 43865 (TW)
(72) Inventor: Lin, Wen-Hwa, 43865 Taichung City (TW)
(74) Representative: Viering, Jentschura & Partner Patent- und Rechtsanwälte

(56) References cited:
- US-A- 4 762 019
- US-A- 4 898 064

## Description

### BACKGROUND OF THE INVENTION

### 1. Field of the Invention:

The present invention relates to a racing pedal according to the preamble of Claim 1. Accordingly, the present invention severally relates to bicycle pedals and more particularly, to a racing pedal that is adaptive to a track bicycle.

### 2. Description of the Related Art:

Track cycling, as one kind of bicycle racing sport, is usually held on specially built bowl-like velodromes using specially designed track bicycles.

For optimizing its racing performance, a track bicycle, unlike road bicycles, is a bicycle having a fixed rear hub and made without any freewheels, speed control systems and brakes so as to minimize its overall weight. In addition, a track bicycle usually has its pedals configured to engage with cleats on a cyclist's shoes so as to not only prevent the cyclist's feet from unintentionally missing or slipping off the pedals, but also leverage the cyclist's upward pulling force applied to the pedals to drive the cranks, thereby improving output and cycling speed.

US Patent No. 6,119,551 has disclosed a bicycle pedal assembly for attaching a shoe thereto via a cleat, wherein the bicycle pedal has clamping members movably mounted to the pedal body for engaging with the cleat. Theoretically, when pedaled, a track bicycle should have the clamping members gripping the cleat firmly. In practice, however, it is found that many traditional clipless pedals fail under cyclists' extreme, particularly pulling force and have their cleats disengaged from the clamping members accidentally. This defect seriously risks cyclists' safety.

In order to eliminate such a risk, some may use an additional strap to bind the foot with the pedal. However, since the strap is not well positioned, it is likely to shift and lose its function in the course where the cyclist cycles. In other words, simply binding the foot with the pedal by means of a free strap is not really helpful to enhance the engagement between the cleat and the pedal.

US 4898064, which is considered as presenting the closest prior art, discloses a bicycle pedal according to the preamble of claim 1.

### SUMMARY OF THE INVENTION

In view of the need for a racing pedal that ensures reliable engagement with a cyclist's shoe, the present invention provides a racing pedal according to claim 1 for a track bicycle. Further embodiments of the invention are described in the dependent claims.

### BRIEF DESCRIPTION OF THE DRAWINGS

The invention as well as a preferred mode of use, further objectives and advantages thereof will be best understood by reference to the following detailed description of an illustrative embodiment when read in conjunction with the accompanying drawings, wherein:
**Figure 1** is an exploded view of a racing pedal according to the present invention;
**Figure 2** is a perspective view of the racing pedal according to the present invention;
**Figures 3** and **4** are cross-sectional views of the racing pedal according to the present invention showing its operation; and
**Figure 5** is an applied view of the racing pedal according to the present invention.

### DETAILED DESCRIPTION OF THE INVENTION

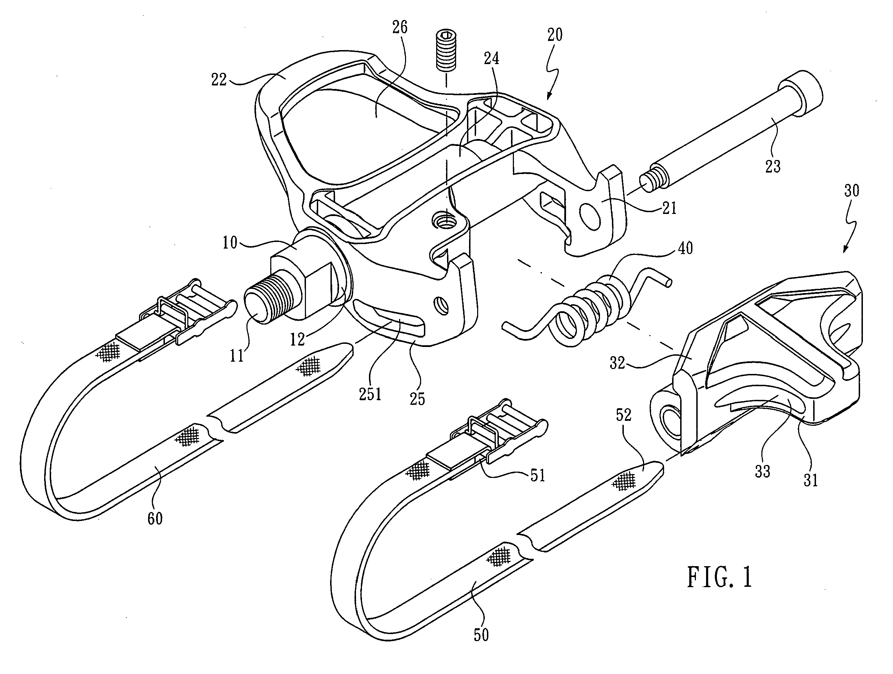

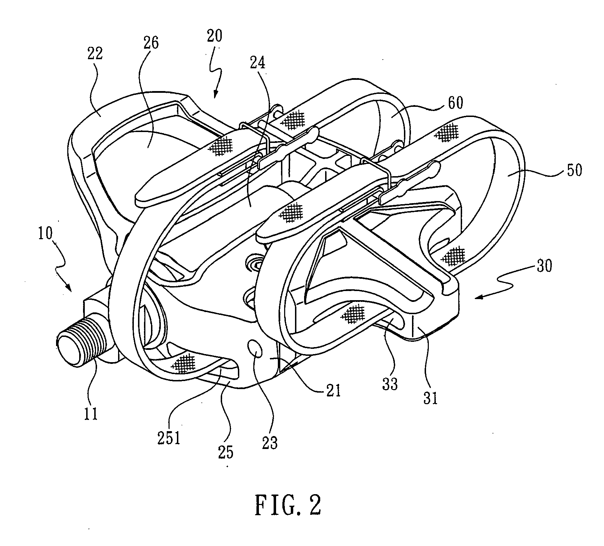

Please refer to **Figure 1** through **Figure 5** for a pedal adaptive to a track bicycle according to the present invention. The track bicycle has a crank for driving the rear wheel to rotate, and the pedal is attached to the free end of the crank. The pedal is configured to engage with a cyclist's shoe cleat **1** and comprises a pivot **10**, a pedal body **20**, a clamping unit **30**, a spring means **40**, a primary strap **50** and a secondary strap **60**.

The pivot **10** has an inner end **11** connected to a crank of the track bicycle and an outer end **12**. The inner end **11** may be connected to the crank by, for example, threaded means.

The pedal body **20** is pivotally connected to the outer end **12** of the pivot **10.** The pedal body **20** has a first end **21**, a second end **22**, an axle **23** near the first end **21** of the pedal body **20**, a rotatory shaft **24** located between the first and second ends **21**, **22** of the pedal body **20** and a retaining portion **25**. The rotatory shaft **24** is coaxial with the pivot **10**. The retaining portion **25** is preferably located between the first end **21** of the pedal body **20** and the rotatory shaft **24**, and is more preferably formed with a channel **251** parallel to the axle **23**. In addition, for engaging the cyclist's shoe cleat **1** in position, the pedal body **20** may have a retaining hole **26** or retaining hook that fits the cleat **1**.

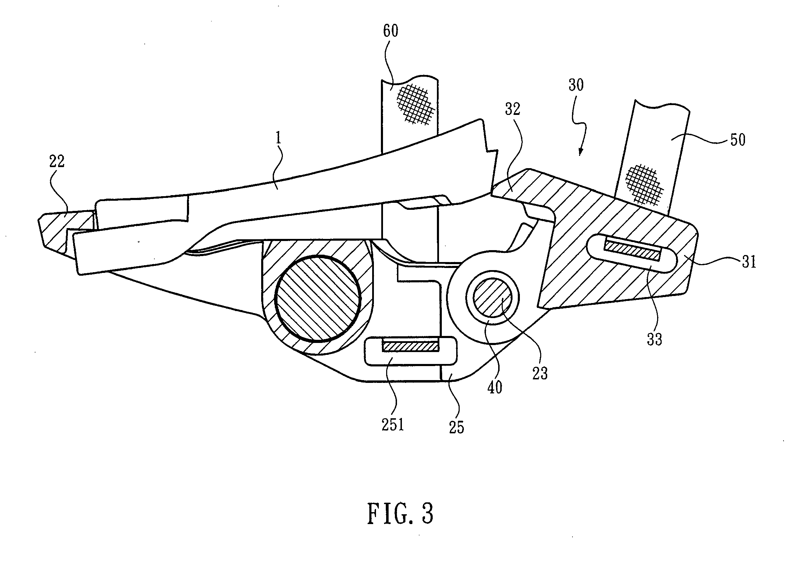

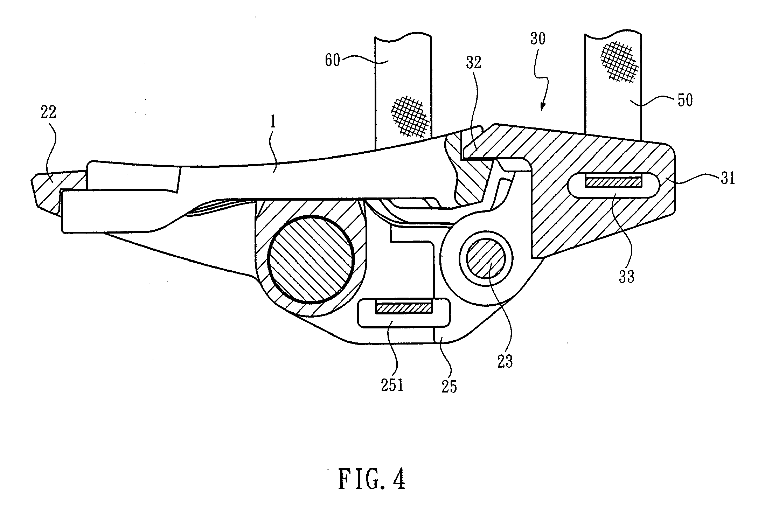

The clamping unit **30** is pivotally attached to the first end **21** of the pedal body **20** and pivotable against the axle **23** between a clamping position and a releasing position. In addition, the clamping unit **30** has a pulling portion **31** and a clamping portion **32** wherein the pulling portion **31** is farther from the second end **22** of the pedal body **20** than the clamping portion **32** is and when the clamping unit **30** pivots on the axle **23**, upward tilt of the pulling portion **31** makes the clamping portion **32** point downward, and vice versa. As shown in **Figure 3**, when the cyclist's shoe is first placed on the pedal of the present invention, its cleat **1** pushes the clamping unit **30** to the releasing position. After the cleat **1** is properly received by the pedal, the clamping unit **30** is returned to the clamping position in virtue of the spring means **40**. At this time, as shown in **Figure 4**, the clamping portion **32** engages with the cyclist's shoe cleat **1**. Preferably, the pulling portion **31** is formed with a channel **33** parallel to the axle **23**.

The spring means **40** serve to endow the clamping unit **30** with a tendency to return to the clamping position. In the present embodiment, the spring means **40** is a torsion spring. However, in other embodiments of the present invention, the spring means **40** may be one or more springs of a different type or elastomers possessing elastic restoring force, such as rubber, for normally biasing the clamping unit **30** toward the clamping position.

The primary strap **50** is positioned in the pulling portion **31** and looped for receiving the cyclist's shoe. For smooth entry of the shoe, the primary strap **50** preferably has a first free end **51** and a second free end **52**. The first and second free ends **51**, **52** are adjustably coupled with each other so as to make the primary strap **50** looped for receiving the cyclist's shoe. Moreover, in the present embodiment, the primary strap **50** passes through the channel **33** and is combined with the clamping unit **30** such that the primary strap **50** can be easily adjusted and replaced.

The secondary strap **60** is positioned in the retaining portion **25** and looped for receiving the cyclist's shoe. In the present embodiment, the secondary strap **60** passes the channel **251** and is combined with the pedal body **20**.

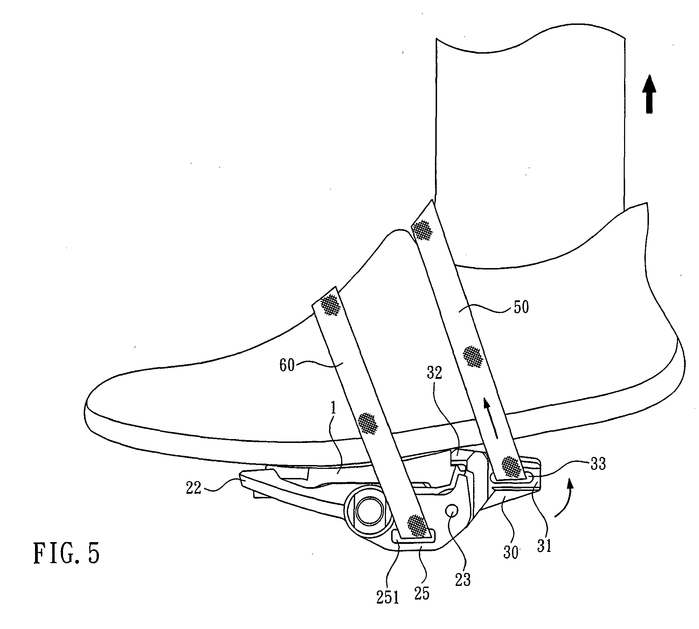

With the primary strap **50**, the pedal of the present invention secures the cyclist's shoe from unintentionally disengagement. The inventor of the present invention has found that, when stepping down or pulling up a pedal, a cyclist can usually apply force with his/her thenar and maintain his/her heel higher than the thenar. The present invention therefore uses this pedaling feature, and locates the primary strap **50** that restricts the cyclist's shoe in the pulling portion **31** of the clamping unit **30**. As shown in **Figure 5**, since the primary strap **50** is positioned in the pulling portion **31** located beyond the axle **23**, when a cyclist pulls up or step down the disclosed pedal, the pulling portion **31** is drawn upward by the primary strap **50**. The moving upward of the primary strap **50** against the axle **23** thus forces the clamping unit **30** to move downward against the axle **23**, thereby further enhancing the clamping force and securing the clamping unit **30** at the clamping position. As a result, the engagement between the clamping portion **32** and the shoe cleat **1** is improved. In other words, by positioning the primary strap **50** in the pulling portion **31** off the axle **23**, the present invention allows that the harder the cyclist pulls up the pedal, the firmer the clamping portion **32** and the cleat **1** engage with each other, thereby effectively preventing the cleat **1** from slipping off the clamping portion **32**.

Furthermore, the present invention implements the channels **251**, **33** to position the primary strap **50** and the secondary strap **60**, so the straps can be prevented from accidentally shifting and losing their function, and can be easily adjusted or replaced when necessary, thereby improving the practicability of the present invention.

The present invention has been described with reference to the preferred embodiment and it is understood that the embodiment is not intended to limit the scope of the present invention. Moreover, as the contents disclosed herein should be readily understood and can be implemented by a person skilled in the art, all modifications which do not depart from the scope of the present invention should be encompassed by the appended claims.

## Claims

1. A racing pedal for a track bicycle, having a pivot (10) adpated to be connected to a crank of the track bicycle; a pedal body (20) pivotally connected to the pivot (10) having a first end (21), a second end (22) and an axle (23) near the first end (21); a clamping unit (30) pivotally connected to the first end (21) of the pedal body (20) and pivotable against the axle (23) between a clamping position and a releasing position, wherein when the clamping unit (30) is at the clamping position, a clamping portion (32) thereof is adapted to engage with a cleat (1) formed at a sole of a cyclist's shoe; and a spring means (40) serving to endow the clamping unit (30) with a tendency to return to the clamping position, and the racing pedal being **characterized in that**:
the clamping unit (30) has a pulling portion (31) that is farther from the second end (22) of the pedal body (20) than the clamping portion (32) is wherein when the clamping unit (30) pivots on the axle (23), upward tilt of the pulling portion (31) makes the clamping portion (32) point downward and thereby holds the clamping unit (30) at the clamping position, and the clamping unit (30) has a primary strap (50) positioned in the pulling portion (31) for being looped to receive the cyclist's shoe.

2. The racing pedal of claim 1, being **characterized in that** the pulling portion (31) is formed with a channel (33) parallel to the axle (23), so that the primary strap (50) is partially received in the channel (33) and thereby positioned in the pulling portion (31).

3. The racing pedal of claim 2, being **characterized in that** the primary strap (50) has a first free end (51) and a second free end (52), wherein the first and second free ends (51)(52) are adjustably coupled with each other to make the primary strap (50) looped and fit for the cyclist's shoe.

4. The racing pedal of claim 1, being **characterized in that** the pedal body (20) further includes a retaining portion (25), and the racing pedal further has a secondary strap (60), so that the secondary strap (60) is positioned in the retaining portion (25) and looped for receiving the cyclist's shoe.

5. The racing pedal of claim 4, being **characterized in that** the pedal body (20) further has a rotatory shaft (24) located between the first and second ends (21)(22) of the pedal body (20) and coaxial with the pivot (10), wherein the retaining portion (25) is located between the first end (21) of the pedal body (20) and the rotatory shaft (24).

6. The racing pedal of claim 5, being **characterized in that** the retaining portion (25) is formed with a channel (251) parallel to the axle (23), so that the secondary strap (60) is partially received in the channel (251) and thereby positioned in the retaining portion (25).

7. The racing pedal of claim 1, being **characterized in that** the spring means (40) comprises a torsion spring.

## Patentansprüche

1. Ein Rennsportpedal für ein Bahnfahrrad mit einem Lagerzapfen (10), der geeignet ist, um mit einem Pedalarm des Bahnfahrrades verbunden zu sein; ein Pedalkörper (20), der zentral mit dem Lagerzapfen (10) verbunden ist und ein erstes Ende (21), ein zweites Ende (22) und eine Achse (23) in der Nähe des ersten Endes (21) aufweist; eine Klemmeinheit (30), die zentral mit dem ersten Ende (21) des Pedalkörpers (20) verbunden ist und gegen die Achse (23) zwischen einer Klemmposition und einer Freigabeposition verschwenkbar ist, wobei, wenn die Klemmeinheit (30) in der Klemmposition ist, ein Klemmbereich (32) davon geeignet ist, mit einem Stollen (1), der an einer Sohle eines Radfahrerschuhs ausgebildet ist, zu verrasten; und ein Federmittel (40), das dazu dient, um die Klemmeinheit (30) mit einer Tendenz zum Rückkehren in die Klemmposition auszustatten, und das Rennsportpedal ist **dadurch gekennzeichnet, dass**
die Klemmeinheit (30) eignen Zugbereich (31) hat, der entfernter von dem zweiten Ende (22) des Pedalkörpers (20) als der Klemmbereich (32) ist, wobei, wenn die Klemmeinheit (30) um die Achse (23) schwenkt, eine aufwärts gerichtete Neigung des Zugbereiches (31) die Spitze des Klemmbereichs (32) nach unten richtet und hierdurch die Klemmeinheit (30) in der Klemmposition hält, und die Klemmeinheit (30) hat einen ersten Riemen (50), der in dem Zugbereich (31) positioniert ist, um eine Schlaufe zu formeln, um den Radfahrerschuh aufzunehmen.

2. Das Rennsportpedal nach Anspruch 1, **dadurch gekennzeichnet, dass** der Zugbereich (31) mit einem Kanal (33) parallel zu der Achse (23) ausgebildet ist, so dass der erste Riemen (50) teilweise in dem Kanal (33) aufgenommen wird und hierdurch in dem Zugbereich (31) positioniert ist.

3. Das Rennsportpedal nach Anspruch 2, **dadurch gekennzeichnet, dass** der erste Riemen (50) ein erstes freies Ende (51) und ein zweites freies Ende (52) aufweist, wobei das erste und das zweite freie Ende (51, 52) justierbar miteinander gekoppelt sind, um den ersten Riemen (50) zu einer Schlaufe zu formen und passend für den Radfahrerschuh zu machen.

4. Das Rennsportpedal nach Anspruch 1, dadurch gekenntzeichnet, dass der Pedalkörper (20) weiterhin einen Aufnahmebereich (25) aufweist, und das Rennsportpedal weiterhin einen zweiten Riemen (60) aufweist, so dass der zweite Riemen (60) in dem Aufnahmebereich (25) positioniert ist und zu einer Schlaufe geformt ist zur Aufnahme des Radfahrerschuhs.

5. Das Rennsportpedal nach Anspruch 4, dadurch gekennzeichet, dass der Pedalkörper (20) weiterhin einen Drehschaft (25) aufweist, der zwischen dem ersten und dem zweiten Ende des Pedalkörpers (20) und koaxial zu dem Lagerzapfen (10) angeordnet ist, wobei der Aufnahmebereich (25) zwischen dem ersten Ende (21) des Pedalkörpers (20) und der Drehwelle (24) anbeordnet ist.

6. Das Rennsportpedal nach Anspruch 5, **dadurch gekennzeichnet, dass** der Aufnahmebereich (25) mit einem Kanal (251) parallel zu der Achse (23) ausgebildet ist, so dass der zweite Riemen (60) teilweise in dem Kanal (251) aufgenommen wird und hierdurch in dem Aufnahmebereich (25) positioniert ist.

7. Das Rennsportpedal nach Anspruch 1, dadurch gekennzeichet, dass die Federmittel (40) eine Torsionsfeder umfassen.

## Revendications

1. Pédale de course pour une bicyclette de piste, ayant un pivot (10) apte à être relié à une manivelle de la bicyclette de piste ; un corps de pédale (20) relié de façon pivotante au pivot (10), ayant une première extrémité (21), une seconde extrémité (22) et un axe (23) près de la première extrémité (21) ; une unité de serrage (30) reliée de façon pivotante à la première extrémité (21) du corps de pédale (20) et apte à pivoter contre l'axe (23) entre une position de serrage et une position de libération, lorsque l'unité de serrage (30) est à la position de serrage une partie de serrage (32) de celle-ci est apte à engager une cale (1) formée à une semelle d'une chaussure d'un cycliste ; et un moyen ressort (40) servant à doter l'unité de serrage (30) d'une tendance à retourner à la position de serrage, et la pédale de course étant **caractérisée par le fait que** :
l'unité de serrage (30) a une partie de traction (31) qui est plus loin de la seconde extrémité (22) du corps de pédale (20) que ne l'est la partie de serrage (32), lorsque l'unité de serrage (30) pivote sur l'axe (23) une inclinaison vers le haut de la partie de traction (31) amène la partie de serrage (32) à être dirigée vers le bas et maintient ainsi l'unité de serrage (30) à la position de serrage, et l'unité de serrage (30) a une sangle principale (50) positionnée dans la partie de traction (31) pour être bouclée pour recevoir la chaussure du cycliste.

2. Pédale de course selon la revendication 1, **caractérisée par le fait que** la partie de traction (31) comporte un canal (33) parallèle à l'axe (23), de telle sorte que la sangle principale (50) est partiellement reçue dans le canal (33) et positionnée ainsi dans la partie de traction (31).

3. Pédale de course selon la revendication 2, **caractérisée par le fait que** la sangle principale (50) a une première extrémité libre (51) et une seconde extrémité libre (52), les première et seconde extrémités libres (51) (52) étant couplées de façon ajustable l'une à l'autre pour amener la sangle principale (50) à être bouclée et ajustée à la chaussure du cycliste.

4. Pédale de course selon la revendication 1, **caractérisée par le fait que** le corps de pédale (20) comprend en outre une partie de retenue (25), et la pédale de course comporte en outre une sangle secondaire (60), de telle sorte que la sangle secondaire (60) est positionnée dans la partie de retenue (25) et bouclée pour recevoir la chaussure du cycliste.

5. Pédale de course selon la revendication 4, **caractérisée par le fait que** le corps de pédale (20) a en outre un arbre rotatif (24) situé entre les première et seconde extrémités (21) (22) du corps de pédale (20) et coaxial au pivot (10), la partie de retenue (25) étant située entre la première extrémité (21) du corps de pédale (20) et l'arbre rotatif (24).

6. Pédale de course selon la revendication 5, **caractérisée par le fait que** la partie de retenue (25) comporte un canal (251) parallèle à l'axe (23), de telle sorte que la sangle secondaire (60) est partiellement reçue dans le canal (251) et positionnée ainsi dans la partie de retenue (25).

7. Pédale de course selon la revendication 1, **caractérisée par le fait que** le moyen ressort (40) comprend un ressort de torsion.
